(19)

Europäisches Patentamt

European Patent Office

Office européen des brevets

(11) **EP 2 565 665 A1**

(12) **EUROPÄISCHE PATENTANMELDUNG**

(43) Veröffentlichungstag:
**06.03.2013 Patentblatt 2013/10**

(51) Int Cl.:
***G01S 1/68*** *(2006.01)* ***G01S 5/14*** *(2006.01)*
***G01S 19/48*** *(2010.01)*

(21) Anmeldenummer: **12006140.3**

(22) Anmeldetag: **29.08.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **01.09.2011 DE 102011111976**

(71) Anmelder: **Identec Solutions AG**
**6890 Lustenau (AT)**

(72) Erfinder:
• **Bachmann, Dieter**
  **6800 Feldkirch (AT)**
• **Chauvin, Vincent**
  **CA 95110 San Jose (US)**

(74) Vertreter: **Riebling, Peter**
**Patentanwalt,**
**Postfach 31 60**
**88113 Lindau/B. (DE)**

(54) **Verfahren und Vorrichtung zur schnellen Ortsbestimmung von bewegten Objekten (z.B. Fahrzeugen) in Richtung auf ein Zielobjekt**

(57)    Verfahren zur schnellen Ortsbestimmung von bewegten Objekten (z.B. Fahrzeugen) in Richtung auf ein Zielobjekt in einem durch Funkbaken ausgeleuchteten Areal, bei dem die aktuellen GPS-Koordinaten des bewegten Objektes und des Zielobjektes bekannt sind und das bewegte Objekt von einer ortsfesten Servereinrichtung und einer dort geladenen Business Application einen Fahrauftrag mindestens dergestalt erhält, sich auf die Position des Zielobjektes zu begeben, wobei im fahrenden Objekt eine Messung der Distanz des fahrenden Objektes zu den Funkbaken durchgeführt wird und dass im fahrenden Objekt ein Vergleich zwischen den übermittelten Positionsdaten des Zielobjektes und der aktuellen Ist-Position des fahrenden Objektes solange durchgeführt wird, bis der Differenzbetrag (Ist-Wert und Soll-Wert) einen bestimmten Schwellenwert unterschritten hat.

Fig. 1

**Beschreibung**

Bei einem sich in einem Areal bewegenden Objekt, welches sich zu einer bestimmten Zielposition bewegen soll, um eine Aktion auszuführen, besteht das Problem darin, dass die Positionsbestimmung und die Rückmeldung des Erreichens der Zielposition an das Objekt (z.B. um die betreffende Aktion zu autorisieren) zu langsam ist.

Die Positionsbestimmung wird mittels einer Messung vom Objekt zu örtlich bestimmten Abstandsbaken im Areal durchgeführt. Das benutzte Messverfahren zwischen dem Objekt und den Abstandsbaken kann z.B. Zeitmessung, Messung der Zeitdifferenz, Distanzmessung, Messung der Signalstärke oder eine Kombination sein. Die so ermittelte Position kann in GPS Koordinaten umgerechnet werden.

Diese Position wird anschließend in einer serverseitigen Business Application (Geschäftslogik) verarbeitet, um eine positionsabhängige Entscheidungen (hat z.B. das Objekt die Zielposition erreicht und ist die Aktion an dieser Position zulässig?) treffen zu können.

In einem Hafen wäre das bewegliche Objekt z.B. ein mobiler Kran, die Aktion das Aufheben eines Containers. Sobald sich der mobile Kran über dem Container befindet, wird das Greifen und Anheben des Containers autorisiert.

Nachteil bei diesem Stand der Technik ist allerdings, dass die Zeit für die Ortsbestimmung des fahrenden Objektes einschließlich der Berechnung der aktuellen Position und der Zuführung der ermittelten Positionsdaten in die Geschäftslogik mit einer Zeitdauer von z.B. 3,5 Sekunden oder mehr behaftet ist.

Dies reicht jedoch nicht aus, dem Objekt eine schnelle Rückmeldung zu geben und die geforderte Aktion (z.B. das Anheben eines Containers) zu autorisieren ohne den Prozess merklich zu verzögern.

Dieser Server berechnet aus den Messwerten die Position des Fahrzeugs. In der Geschaftslogik wird diese Position gegen den aktuellen Arbeitsauftrag des Fahrzeugs geprüft und eine entsprechende Rückmeldung (z.B. Position erreicht, Container absetzen, autorisiert) an das Fahrzeug übermittelt. Wegen der am Prozess beteiligten System und den Übertragungszeiten der Daten kann eine Verzögerung von über 10 Sekunden auftreten bis der Prozess (Ladeoperation) abgeschlossen ist

Es werden also sehr lange Zeiten für die Berechnung und die Entscheidung benötigt, was nachteilig ist.

Der Erfindung liegt deshalb die Aufgabe zugrunde, die Dauer der Positionsvalidierung und Autorisierung einer Aktion im bewegten Objekt wesentlich zu verringern.

Zur Lösung der gestellten Aufgabe ist die Erfindung durch die technische Lehre des Anspruches 1 gekennzeichnet.

Wesentliches Merkmal der Erfindung ist, dass die Zielkoordinaten, zu dem sich das fahrende Objekt bewegen soll, bereits schon vor Ausführung des Fahrauftrages (z.B. dem Hafensystem) bekannt sind. Wenn z.B. ein bestimmter Container in der Reihe 5 in der Spalte 10 und in der Höhe 8 erfasst werden soll, so ist dessen Koordinate (z.B. als GPS-Koordinate) dem Hafensystem und der Business Applikation genau bekannt.

Hierbei ist es bekannt, dass der Fahrer des Hafenkrans oder dergleichen nicht die absoluten GPS-Positionen erhält, sondern relative, logische Objektpositionen (z.B. Reihe 5, Spalte 8, Höhe 0); er erhält also logische Koordinaten.

Damit werden die Zielkoordinaten des Zielobjektes vorab im Server gespeichert, sodass sowohl die logische Position als auch die GPS Koordinaten im Server vorliegen.

Die GPS-Koordinaten der Zielposition im Server werden in Entfernungswerte umgerechnet, sodass aus diesen GPS-Koordinaten definierte Entfernungen zu den feststehenden Abstandsbaken im Hafenareal als geometrische Distanz berechnet werden. Diese Distanzwerte werden in im jeweils eingesetzten Positionsbestimmungsverfahren aus den ermittelten Messgrößen (z.B. Zeitmessung, Messung der Zeitdifferenz, Distanzmessung, Messung der Signalstärke oder eine Kombination vgl. oben) umgerechnet.

Die so errechneten Messgrößen werden dem fahrenden Objekt mitgeteilt, das einen Arbeitsauftrag dergestalt erhält, dass es sich zu der Position in Spalte 10, Reihe 8 und der Höhe 5 bewegen soll, um dort z.B. einen Container aufzunehmen. Gleichzeitig werden die vorberechneten Messwerte zu den Distanzbaken oder Referenzpunkten an der Zielposition als feststehende Größe an das fahrende Objekt übermittelt.

Nach der Übertragung ermittelt das fahrende Objekt permanent die Messgrößen zu den feststehenden Funkbaken, wobei die aktuellen Messgrößen nicht mehr an den ortsfesten (z.B. hafenseitigen) Server zur Verarbeitung und Entscheidung übergeben werden, sondern das fahrende Objekt ermittelt die Abweichung bzw. der Fehler zwischen den aktuellen Messgrößen und den Messgrößen am Ziel für sich selbst.

Der errechnete Fehler ist ein Maß für die Entfernung des Objektes von den Zielkoordinaten. Wichtig ist, dass das Ergebnis des Fehlers eine Größe (z.B. ein Skalar) ist, die man einfach und ohne Aufwendung von aufwendigen Rechenoperationen vergleichen kann.

Das Maß für den Fehler wird mit einem mathematischen Standardverfahren für geometrische Fehler z.B. als mittlerer Quadratischer Fehler (MSE) oder Wurzel des mittleren Quadratischen Fehlers (RMSE) ermittelt. Das Verfahren zur Fehlerbestimmung ist nicht entscheidend. Es ist hingegen wichtig, dass das Berechnungsverfahren nicht rechenintensiv ist und der Fehler bei Annäherung an die Zielposition abnimmt.

Beispiele für die Fehlerberechnung sind nachfolgend angegeben:

MSE:

mi ...Messwert vom Objekt zu einer Distanzbake

pi ...Vorberechneter Soll-Messwert vom Objekt zu einer Distanzbake

N ... Anzahl der Messungen

$$MSE = Sum1..N( (mn-pn)2 ) / N$$

RMSE:
RMSE = SQRT (MSE)

Für die Entscheidung, ob das Objekt das Ziel erreicht hat, wird der Fehler gegen einen Schwellenwert geprüft. Der jeweils gewählte Schwellenwert ist abhängig vom jeweiligen Messverfahren, dem Fehlerverfahren und von der geforderten Genauigkeit der Positionierung am Ziel.

Es wird also eine dezentrale Messung der Distanz des fahrenden Objektes zu den feststehenden Baken gemacht und ein lokaler Vergleich mit den übermittelten Daten des Zielobjektes im fahrenden Objekt selbst durchgeführt. Wichtig ist, dass das Objekt selbst, sobald der berechnete Fehler unter einem zuvor definierten Schwellenwert liegt, entscheiden kann, dass die Zielposition erreicht wurde.

Dies führt dazu, dass keine externe Serverhilfe mehr benötigt wird und keine lange Rechenzeit, denn die eigentliche Entscheidung findet im bewegten Objekt selbst statt, nämlich durch die Berechnung des Fehlers zwischen den Messwerten an der aktuellen Position und den Soll-Messwerten an der Zielposition.

Entscheidend bei der Erfindung ist also, dass von einer bekannten Ziel GPS-Position des bewegten Objektes rückwärts in Messwerte umgerechnet wird und dass ferner der (Distanz)Fehler kontinuierlich im fahrenden Objekt selbst berechnet wird und dort kontinuierlich mit dem Schwellenwert verglichen wird.

Der Vorteil der Erfindung liegt darin, dass zum Zeitpunkt der Entscheidung bei der Ausführung des Fahrauftrages im fahrenden Fahrzeug nicht mehr externe

Rechnerhilfe des externen ortsfesten Servers benötigt wird, der mit einer rechenintensiven Business Application zusammen hängt.

Die Daten werden soweit vorverarbeitet, dass die gesamten Distanzmessungen und die Entscheidungen hierfür dezentral im fahrenden Objekt stattfinden und in Echtzeit getroffen werden.

BEISPIEL: Prozesschritte

1. Schritt: Die Business Application entscheidet, dass ein Arbeitsauftrag an den Fahrer des bewegten Objektes geschickt wird.

2. Schritt: Im ortsfesten Server werden aus der GPS-Koordinate der Zielposition die Soll-Messwerte (an der Zielposition) berechnet.

Der Auftrag besteht also aus einem Teil für den Fahrer und einem Teil für das System am Fahrzeug, welches die Ausführung des Auftrags kontrolliert..

3. Schritt: Der Auftrag wird an das Fahrzeug übermittelt.

4. Schritt: Der Fahrer erhält in seinem Display nun die Anzeige, dass er im Rastersystem des Hafens zur Spur 35, Reihe 18 und Höhe 5 fahren soll, um dort einen Container aufzunehmen.

5. Schritt: Sofort nach Erhalt dieses Auftrages aus Schritt 4 fährt der Fahrer los, ohne auf weitere Informationen zu warten oder weitere Daten von einem Server nachzuladen, was unter Umständen mit erheblicher Rechenzeit behaftet wäre.

6. Schritt: Gleichzeit werden in dem fahrenden Objekt ständig Messungen zu den Referenzpunkten durchgeführt und der aktuelle Fehler (zwischen den Messwerten und den Sollmesswerten) berechnet.

7. Schritt: Sobald das fahrende Objekt am Ort des Zielobjektes ankommt, gehen alle Vergleichswerte aus der Fehlerdistanzmessung nach Schritt 6 gegen Null. Sobald der Schwellwert für den Fehler unterschritten ist bekommt der Fahrer eine visuelle Bestätigung, dass er das Zielobjekt erreicht hat

8. Schritt: Gleichzeitig wird die entsprechende Aktion (z.B. Container aufnehmen) autorisiert. Es erfolgt also eine elektronische Kontrolle bezüglich der Verladeoperation, um zu vermeiden, dass der Fahrer den falschen Container aufnimmt

Bei der Erfindung werden die normalerweise vorhandenen Prozesszeiten vermieden: Es wird sehr schnell dezentral entschieden und somit die Verzögerung für die Autorisierung stark verkürzt. Entscheidend ist, dass alle zeitkritischen Berechnungen in Echtzeit am fahrenden Objekt gemacht werden.

Die üblichen Prozesszeiten werden verkürzt, die etwa wie folgt ablaufen:

Ein Fahrzeug ist mit einem Tag zur Positionsbestimmung ausgestattet. Dieser Tag misst die Distanz zu den Referenzpunkten und übermittelt die Information über Funk an einen Server. Dieser Server berechnet aus den Messwerten die Position des Fahrzeugs. In der Geschäftslogik wird diese Position gegen den aktuellen Arbeitsauftrag des Fahrzeugs geprüft und eine entsprechende Rückmeldung (z.B. Position erreicht, Container absetzen autorisiert) an das Fahrzeug übermittelt.

Wegen der am Prozess beteiligten System und den Übertragungszeiten der Daten kann eine Verzögerung von über 10 Sekunden auftreten bis der Prozess (Ladeoperation) abgeschlossen ist

Zur Vermeidung dieser unerwünscht langen Rechenzeiten sieht die Erfindung nun vor, dass der Arbeitsauftrag mit der Zielposition und den vorberechneten Messwerten an der Zielposition vorab an das fahrende Objekt zu einem Zeitpunkt geliefert werden. Es ist also genügend Zeit, die notwendigen Rechenoperationen am externen Server auszuführen.. Bei Durchführung des Arbeitsauftrages liegen dann bereits sämtliche Informationen für eine schnelle Entscheidung am bewegten Objekt vor.

Durch die im bewegten Objekt stattfindende dezentrale Entscheidungsfindung werden demgemäß wesentliche Prozess Zeiten eingespart. Die aufwändigen Berechnungen wurden aus dem zeitkritischen Teil des Verfahrens herausgenommen und vor dem Start des Prozesses (Arbeitsauftrages) vorverlagert. Man bereitet die Entscheidung bereits schon längerfristig vor und entscheidet dann kurzfristig. Die aufwändigen Berechnungen finden deshalb nicht mehr in der kritischen Phase statt. Dieses Verfahren funktioniert dann, wenn vor dem Start des Prozesses bereits bekannt ist, was das bewegte Objekt tun soll, obwohl das Objekt noch lange braucht, um dies zu tun.

Wenn man beispielsweise mit einem Fahrzeug 30 km/h schnell fährt und dieses Fahrzeug soll eine Fahrstrecke von 2 km durchfahren hat man während der Fahrtzeit von z.B. 10 min genügend Zeit, den Arbeitsauftrag und die Entscheidung daraus mit allen Berechnungen während der Fahrt vorzubereiten. Dies führt dazu, dass der Fahrer des am Ziel ankommenden bewegten Objektes sofort eine Freigabe über die Aufnahme oder das Absetzen seines Containers erhält, ohne dass er auf eine von einem externen Server angestellte Berechnung und Autorisierung warten muss.

Dies ist ein wesentlicher Unterschied gegenüber dem Stand der Technik, denn beim Stand der Technik war bisher lediglich bekannt, die Berechnung der Koordinaten aus den Messwerten des bewegten Objektes und alle daraus folgenden Berechnungen bzw. Entscheidungen erst dann durchzuführen, wenn das bewegte Objekt am Zielobjekt angelangt war. Dies vermeidet die Erfindung.

Wichtig bei der Erfindung ist, dass die im bewegten Objekt angestellte Fehlerbestimmungsroutine möglichst kurz abläuft, d. h. also nicht wesentliche Rechenzeit verbraucht, weil sonst wieder der Nachteil gegenüber dem Stand der Technik besteht, dass Zeit für die Berechnung verwendet wird, die man eigentlich vermeiden will. Der Algorithmus für die Fehlerberechnung kann von der Anwendung abhängig gemacht werden und von der Art der Abstandsmessung. Deshalb gibt es verschiedene Möglichkeiten eine solche Fehlerkorrektionsroutine durchzuführen.

(Beispiele siehe oben MSE, RMSE)

Die Fehlerberechnung findet jedoch im bewegten Objekt statt und muss deshalb mit geringem Rechenaufwand möglich sein.

Wichtig ist, dass die vorliegende Erfindung nicht auf eine Position beschränkt ist, sondern gleichzeitig mehrere Zielpositionen oder eine Zone zu verarbeiten. Entscheidend ist also, dass aufgrund der niedrigen Rechenzeiten auch multiple Ziele berechnet werden können und angefahren werden können oder sogar Zonen. Beispielsweise könnte der Hafenkran auch den Arbeitsauftrag erhalten, einen beliebigen von 3 vorhandenen Containern aufzunehmen und nacheinander folgend die beiden anderen, verbleibenden Container aufzunehmen.

Die Erfindung ist jedoch nicht auf bewegte Objekte in Form eines Hafenkrans oder dergleichen beschränkt. Das bewegte Objekt kann auch eine Person mit einem tragbaren Display sein, die bestimmte Arbeitsaufträge ausführt. Ebenso können mehrere Personen mit dem erfindungsgemäßen Verfahren arbeiten.

Die Erfindung kann sowohl auf einer Fläche (2D) oder im Raum (3D) genutzt werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

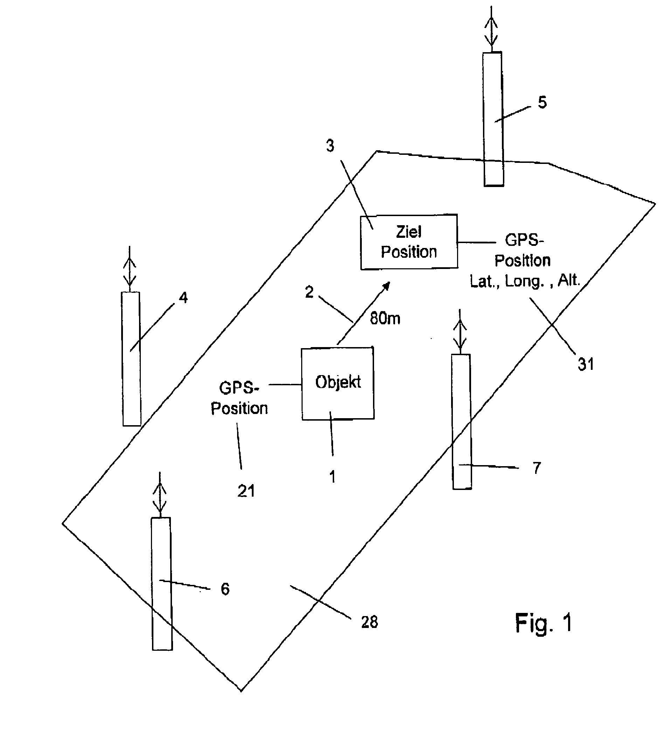

Figur 1: schematisierte Darstellung des Verfahrens,

Figur 2: die gleiche Darstellung wie Figur 1 mit Darstellung der ermittelten Messwerte,

Figur 3: schematisiert das Verfahren nach den Figuren 1 und 2 mit weiteren Vorrichtungen,

Figur 4: eine Momentaufnahme der Distanzbestimmung zu den einzelnen Funkbaken während des Fahrbetriebes des bewegten Objektes,

Figur 5: Verfahrensschema der Datenerhebung zwischen Server und dem bewegten Objekt,

Figur 6: Ablaufschema bei der Ausführung des Verfahrens.

In einem örtlich umrissenen, definierten Areal 28, z. B. einem Hafen-Areal, sind in gegenseitigem Abstand, das Areal 28 umgrenzende Funkbaken 4, 5, 6, 7 angeordnet, welche eine Distanzmessung zu einem sich im Areal 28 bewegenden Objekt 1 durchführen können. Das Objekt 1 hat eine bestimmte aktuelle GPS-Position 21 und bewegt sich beispielsweise in Pfeilrichtung 2 in Richtung auf ein Zielobjekt 3 zu. Das Zielobjekt 3 hat beispielsweise die GPS-Position 31.

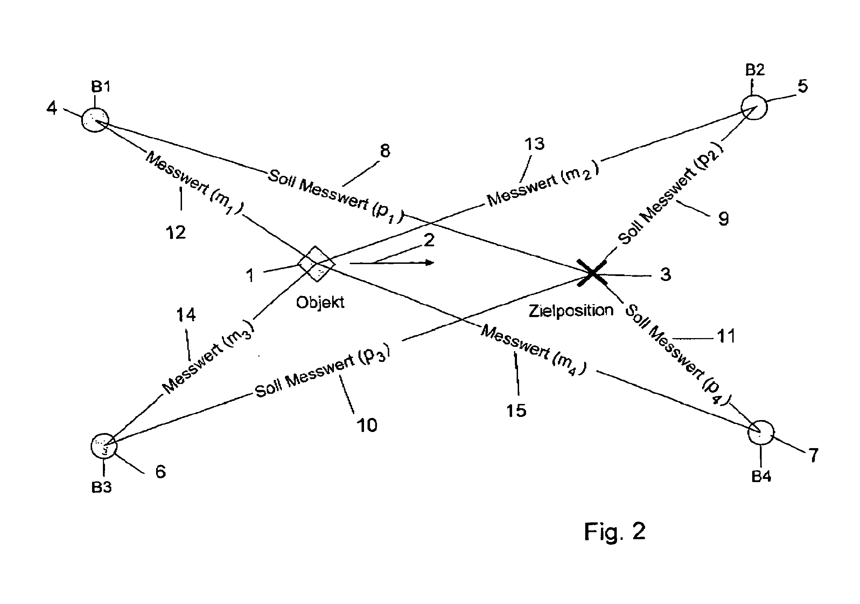

Gemäß Figur 2 erfolgt eine ständige Entfernungsmessung zwischen jeder einzelnen Funkbake 4-7 zu dem sich in Pfeilrichtung 2 bewegenden Objekt 1, wodurch die Ist-Messwerte 12-15 erzeugt werden.

Gleichzeitig ist jedoch die Zielposition des Zielobjektes 3 bekannt, in dem dem Zielobjekt 3 die Soll-Messwerte 8-11 zugeordnet sind.

Die Erfassung der Ziel-Koordinaten des Zielobjektes 3 durch die Erhebung der Soll-Messwerte 8-11 kann lange vor Ausführung eines Fahrauftrages und lange vor Ingangsetzung des Objektes 1 vorgenommen werden.

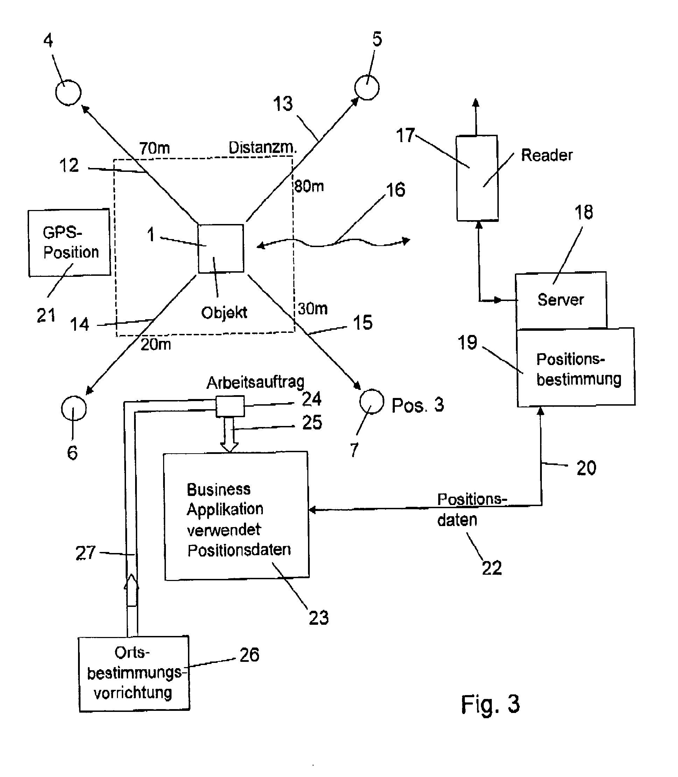

Gemäß Figur 3 erfolgt also bezüglich des sich bewegenden Objektes 1 eine ständige Distanzmessung und Erhebung der Ist-Messwerte 12-15, wobei diese Messwerte über eine Kommunikationsverbindung 16, die bevorzugt drahtlos ist, einem ortsfesten Reader 17 zugeleitet werden, der mit einem ortsfesten Server 18 verbunden ist.

Der Server 18 ist mit einer Vorrichtung zur Positionsbestimmung 19 verbunden, in der die aktuellen Ist-Koordinaten des bewegten Objektes 1 berechnet werden, welche über die Datenverbindung 20 in Form von Positionsdaten 22 der Business-Applikation 23 zugeleitet werden.

Diese Business-Applikation ist ein Software-Programm, welches im Server 18 verwaltet wird und welches Daten von einer Ortsbestimmungsvorrichtung 26 über die Datenverbindung 27 erhält.

In der Ortsbestimmungsvorrichtung 26 sind sämtliche aktuellen Ortspositionen (Soll-Messwerte 8-11) jeden beliebigen Ziel-Objektes 3 im Areal 28 gespeichert.

In der Business-Applikation 23 wird somit ein Arbeitsauftrag 24 für das sich bewegende Objekt 1 geladen und über eine Datenverbindung 25 in die Business-Applikation 23 eingespeichert.

Somit ist im Schema nach Figur 3 festgelegt, welche aktuelle Position das Objekt 1 im Areal hat, und ferner ist damit festgelegt, welche Entfernung das Objekt 1 zu dem Zielobjekt 3 aufweist.

Diese Daten werden über die Datenverbindung 20 dem Reader 17 mitgeteilt, der über die Kommunikationsverbindung 16 den von der Business-Applikation 23 formulierten Arbeitsauftrag 24 an das bewegte Objekt 1 übermittelt.

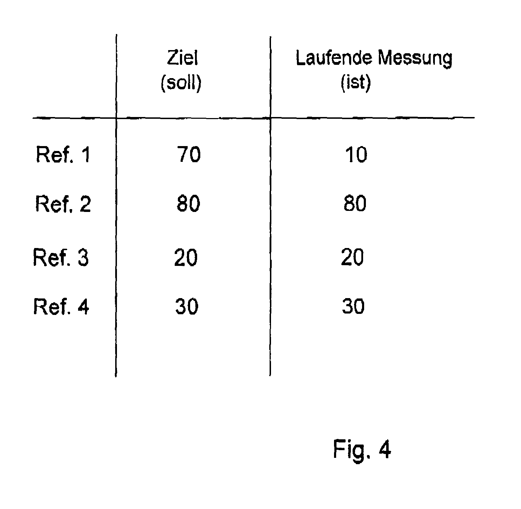

Zum Zeitpunkt der Ermittlung des Arbeitsauftrages gilt beispielsweise die in Figur 4 dargestellte Fehlertabelle. Dort ist erkennbar, dass das Zielobjekt bezüglich der Funkbake 4 eine Entfernung von 70 m aufweist, bezüglich der Funkbake 5 eine Entfernung von etwa 80 m und bezüglich der Funkbaken 6 und 7 jeweils Entfernungen von 20 und 30 m.

Ebenso besagt diese Tabelle, dass die aktuelle Position des bewegten Objektes 1 10 m von der Funkbake 4 entfernt ist, 80 m von der Funkbake 5, 20 m von der Funkbake 6 und 30 m von der Funkbake 7.

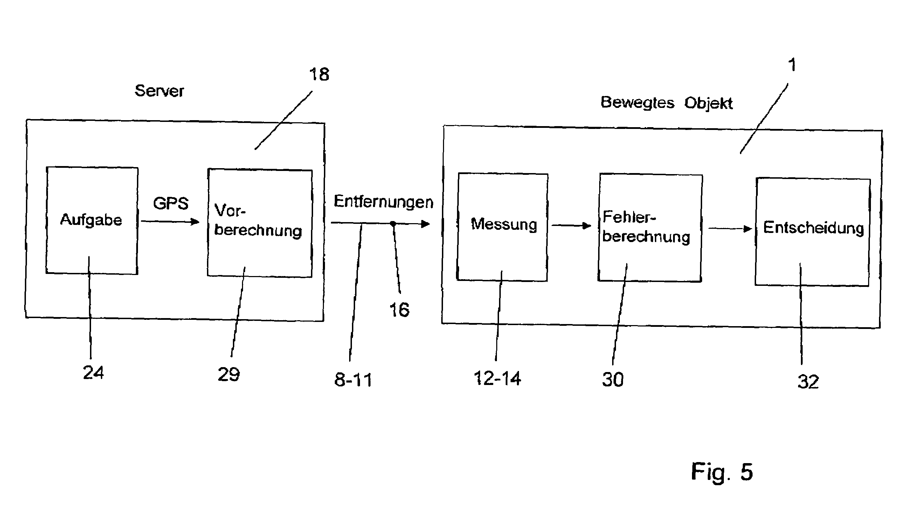

Die Figur 5 zeigt nochmals schematisiert die Erzeugung des Arbeitsauftrages 24 im ortsfesten Server 18, wobei der Arbeitsauftrag 24 unter Zuhilfenahme der aktuellen GPS-Koordinaten des Zielobjektes 3 in einer Vorausberechnungsstufe 29 in Entfernungswerte umgerechnet wird und diese Entfernungswerte als Soll-Messwerte 8-11 über die Kommunikationsverbindung 16 an das bewegte Objekt 1 übertragen werden.

Im bewegten Objekt 1 findet deshalb ständig eine Erfassung der aktuellen Ist-Messwerte 12-14 und ein Vergleich mit den Soll-Messwerten 8-11 des Zielobjektes statt, und es wird hieraus eine Fehlerberechnungsstufe 30 angesteuert, in der die Abweichungen zwischen der Ist-Position und der Sollposition gemäß Figur 4 berechnet werden.

Bezogen auf Figur 4 würde deshalb der Fehler bezüglich der Funkbake 4 einen Differenzwert von 60 m ergeben, bezüglich der Funkbake 5 einen Differenzfehler von Null und bezüglich der Funkbake 3 ebenfalls einen Differenzfehler von Null und bezüglich der Funkbake 4 ebenfalls einen Differenzfehler von Null.

Dies bedeutet, dass sich das bewegte Objekt 1 nur noch bezüglich der Funkbake 4 in einer bestimmten Richtung bewegen muss, um den noch bestehenden Differenzfehler gegen einen vorgegebenen Schwellenwert in der Nähe von Null zu bringen.

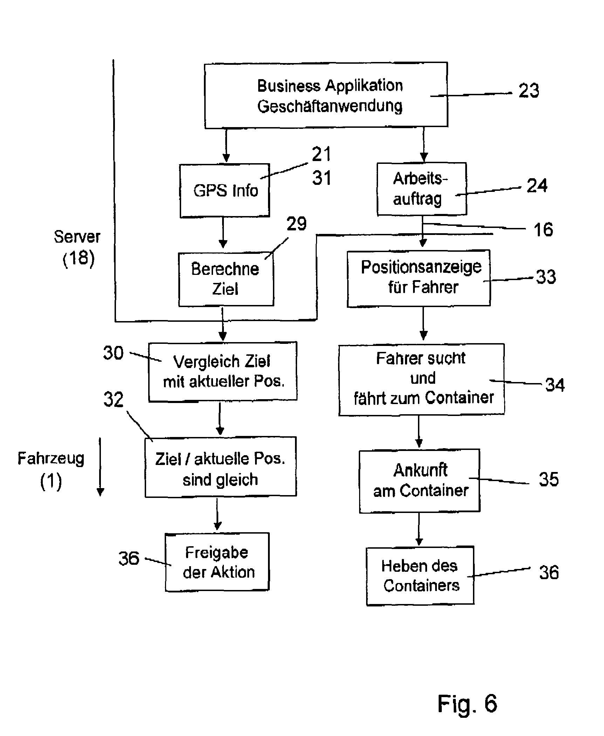

Die Figur 6 zeigt den Verfahrensablauf des erfindungsgemäßen Verfahrens, wobei ausgehend von der Business-Applikation 23 zunächst die Soll-Messwerte des Zielobjektes als GPS-Positionen 31 erfasst sind und gleichzeitig die aktuelle GPS-Position 21 des Objektes 1 bekannt ist und in einer Vorausberechnungsstufe 29 entschieden wird, welches bewegte Objekt überhaupt den Arbeitsauftrag 24 erhalten soll.

Dieser wird über die Kommunikationsverbindung 16 dem fahrenden Objekt 1 übermittelt und auf einer Anzeige 33 angezeigt.

Der Fahrer kann somit sofort losfahren und durch Beobachtung der Anzeige 33 sofort beginnen, das Zielobjekt zu suchen, weil das bewegte Objekt 1 zunächst mit einer großen Fehlerabweichung sich in Richtung auf das Zielobjekt 3 bewegt, dieser Fehler jedoch mit zunehmender Annäherung an das Zielobjekt 3 jedoch gegen Null geht.

Im Block 35 wird dem Fahrer optisch die Ankunft am Zielobjekt 3 signalisiert und im Block 36 erhält er die Freigabe für die Ausführung des Werkauftrages.

Im bewegten Objekt 1 selbst findet in der Fehlerberechnungsstufe 30 ständig eine Differenzbildung zwischen den Soll-Messwerten 8-11 des Zielobjektes und den Ist-Messwerten 12-15 des bewegten Objektes 1 statt, und es wird hieraus ein Schwellenwert gebildet. Sobald dieser Schwellenwert gegen Null geht, wird die Entscheidungsstufe 32 angesteuert. Diese steuert über eine Datenleitung eine elektronische Prüfroutine an, die entscheidet, ob nun der Arbeitsauftrag ausgeführt werden soll oder nicht und diesen dann freigibt.

**Zeichnungslegende**

1   Objekt

2   Pfeilrichtung

3   Zielobjekt

4   Bake 1

5   Bake 2

6   Bake 3

7   Bake 4

8   Soll-Meßwert p1

9   Soll-Meßwert p2

10   Soll-Meßwert p3

11   Soll-Meßwert p4

12   Ist-Meßwert m1

13   Ist-Meßwert m2

14   Ist-Meßwert m3

15   Ist-Meßwert m4

16   Kommunikationsverbindung

17   Reader

18   Server

19   Positionsbestimmung

20   Datenverbindung

21   PS-Position (von Objekt 1)

22   Positionsdaten

23   Business-Applikation

24   Arbeitsauftrag

25   Datenverbindung

26   Ortsbestimmungsvorrichtung

27   Datenverbindung

28   Areal

29   Vorausberechnungsstufe

30   Fehlerberechnungsstufe

31   GPS-Position (vom Ziel 3)

32   Entscheidungsstufe

33   Anzeige (im Objekt 1)

34   Fahrersuche

35   Ankunft

36   Ausführung Werkauftrag

**Patentansprüche**

1.   Verfahren zur schnellen Ortsbestimmung von bewegten Objekten (1) (z.B. Fahrzeugen) in Richtung auf ein Zielobjekt (3) in einem durch Funkbaken (4-7) ausgeleuchteten Areal (28), bei dem die aktuellen GPS-Koordinaten (21, 31) des bewegten Objektes (1) und des Zielobjektes (3) bekannt sind und das bewegte Objekt (3) von einer ortsfesten Servereinrichtung (18) und einer dort geladenen Business Application (23) einen Fahrauftrag (24) mindestens dergestalt erhält, sich auf die Position des Zielobjektes (3) zu begeben, **dadurch gekennzeichnet, dass** im fahrenden Objekt (1) eine Messung der Distanz des fahrenden Objektes (1) zu den Funkbaken (4-7) durchgeführt wird und dass im fahrenden Objekt (1) ein Vergleich zwischen den übermittelten Positionsdaten des Zielobjektes (3) und der aktuellen Ist-Position des fahrenden Objektes (1) solange durchgeführt wird, bis der Differenzbetrag (Ist-Wert und Soll-Wert) einen bestimmten Schwellenwert unterschritten hat.

2.   Verfahren nach Anspruch 1, **dadurch gekennzeichnet, dass** die Differenzbildung zwischen der Ist-Position und der Soll-Position im fahrenden Objekt (1) selbst stattfindet, und dass das bewegte Objekt (1) selbst entscheidet, sobald der berechnete Fehler unter einem zuvor definierten Schwellenwert liegt, der angibt, dass die Zielposition (31) des Zielobjektes (3) erreicht wurde.

**3.** Verfahren nach einem der Ansprüche 1 oder 2, **dadurch gekennzeichnet, dass** die Zielkoordinaten (31) jeden beliebigen Zielobjektes (3) im Areal (28) vorab im ortsfesten Server (18) gespeichert werden, dass die GPS-Koordinaten (31) des Zielobjektes (3) im Server (18) in Entfernungswerte umgerechnet werden, sodass aus den GPS-Koordinaten (31) definierte Entfernungen zu den feststehenden Funkbaken (4-7) im Areal (28) als geometrische Distanz berechnet werden,
dass die so errechneten Messgrößen dem fahrenden Objekt (1) im Zusammenhang mit einem Arbeitsauftrag (24) mitgeteilt werden, und dass das fahrende Objekt (1) während seiner Fahrt in Richtung auf das Zielobjekt (3) die Abweichung bzw. der Fehler zwischen der aktuellen Fahrposition und der Zielposition für sich selbst errechnet und hieraus einen Differenzwert bildet, der gegen den Schwellenwert verglichen wird.

**4.** Verfahren nach einem der Ansprüche 1 bis 3, **dadurch gekennzeichnet, dass** von einer bekannten Zielposition (31) des Zielobjektes (3) und der GPS-Position (21) des bewegten Objektes (1) rückwärts in Messwerte umgerechnet wird und dass ferner der (Distanz)Fehler kontinuierlich im fahrenden Objekt (1) berechnet und dort kontinuierlich mit dem Schwellenwert verglichen wird.

**5.** Verfahren nach einem der Ansprüche 1 bis 4, **gekennzeichnet durch** folgende Arbeitsschritte:

> 1. Schritt: Die im Server (18) geladene Business Application (23) entscheidet, dass ein Arbeitsauftrag (24) an den Fahrer des bewegten Objektes (1) geschickt wird.
> 2. Schritt: Im ortsfesten Server (18) werden aus der GPS-Koordinate (31) der Zielposition (3) die Soll-Messwerte (an der Zielposition) berechnet, wobei der Arbeitsauftrag (24) aus einem Teil für den Fahrer und einem Teil für das System am bewegten Objekt (1) besteht, welches die Ausführung des Auftrags kontrolliert..
> 3. Schritt: Der Arbeitsauftrag (24) wird an das bewegte Objekt (1) übermittelt.
> 4. Schritt: Der Fahrer erhält in seinem Display die Anzeige, dass er im Rastersystem des Areals zu einer logischen Position (z.B. Spur 35, Reihe 18 und Höhe 5) des Zielobjektes (3) fahren soll, um dort den Arbeitsauftrag (z.B. Aufnahme einen Container) auszuführen.
> 5. Schritt: Nach Erhalt des Arbeitsauftrages aus Schritt 4 fährt der Fahrer los, ohne auf weitere Informationen zu warten oder weitere Daten von einem Server (18) nachzuladen.
> 6. Schritt: Während der Fahrt werden im fahrenden Objekt (1) ständig Entfernungsmessungen zu den ortsfesten Referenzpunkten (Funkbaken 4-7) durchgeführt und der aktuelle Fehler (zwischen den Ist-Messwerten und den Sollmesswerten) wird im bewegten Objekt (1) berechnet und gegen den vorgegebenen Schwellenwert verglichen.
7. Schritt: Sobald das fahrende Objekt (1) am Ort des Zielobjektes (3) ankommt, geht der Schwellenwert als Ergebnis der Fehlerdistanzmessung aus Schritt 6 gegen Null;.sobald der Schwellenwert einen vorgegebenen Betrag unterschritten hat, bekommt der Fahrer eine visuelle Bestätigung, dass er das Zielobjekt (3) erreicht hat.
8. Schritt: Gleichzeitig wird der Arbeitsauftrag (24) (z.B. Container aufnehmen) autorisiert; und es erfolgt eine elektronische Kontrolle bezüglich des Arbeitsauftrages (z.B. der Verladeoperation), um zu vermeiden, dass der Fahrer den falschen Arbeitsauftrag (z.B. den falschen Container aufnimmt) ausführt.

**6.** Vorrichtung zur schnellen Ortsbestimmung von bewegten Objekten (1) (z.B. Fahrzeugen) in Richtung auf ein Zielobjekt (3) in einem durch Funkbaken (4-7) ausgeleuchteten Areal (28), bei dem die GPS-Koordinate (21) des bewegten Objektes (1) und die GPS-Koordinate (31) des Zielobjektes (3) bekannt sind und das bewegte Objekt (3) von einer ortsfesten Servereinrichtung (18) und einer dort geladenen Business Application (23) einen Fahrauftrag (24) mindestens dergestalt erhält, sich auf die Position des Zielobjektes (3) zu begeben, **dadurch gekennzeichnet, dass** das bewegte Objekt ein RFID-Tag trägt, das die Distanz zu den Referenzpunkten (Funkbaken 4-7) misst und die Information über eine drahtlose Kommunikationsverbindung (16) an einen mit dem Server (18) verbundenen Reader (17) übermittelt.

**7.** Vorrichtung nach Anspruch 6 zur Ausführung des Verfahrens nach mindestens einem der Ansprüche 1 bis 5, **dadurch gekennzeichnet, dass** der Arbeitsauftrag (24) mit der Zielposition (31) und den vorberechneten Messwerten der Zielposition (31) vor Ausführung oder gleichzeitig mit der Ausführung des Arbeitsauftrages (24) an das fahrende Objekt (1) lieferbar sind.

Fig. 1

Fig. 2

Fig. 3

| | Ziel (soll) | Laufende Messung (ist) |
|---|---|---|
| Ref. 1 | 70 | 10 |
| Ref. 2 | 80 | 80 |
| Ref. 3 | 20 | 20 |
| Ref. 4 | 30 | 30 |

Fig. 4

Bewegtes Objekt

1

Messung

Fehlerberechnung

Entscheidung

12-14

30

32

Entfernungen

16

8-11

Server

18

Aufgabe

GPS

Vorberechnung

24

29

Fig. 5

Fig. 6

Europäisches
Patentamt

European
Patent Office

Office européen
des brevets

## EUROPÄISCHER RECHERCHENBERICHT

Nummer der Anmeldung

EP 12 00 6140

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 096 074 A1 (NOELL MOBILE SYSTEMS GMBH [DE]) 2. September 2009 (2009-09-02) * Absatz [0015] - Absatz [0029] * ----- | 1-7 | INV. G01S1/68 G01S5/14 G01S19/48 |
| X | WO 02/42881 A2 (CARSON ROBERT M [US]) 30. Mai 2002 (2002-05-30) * Seite 3, Zeile 1 - Seite 7, Zeile 10 * * Seite 8, Zeilen 3-8 * ----- | 1,2,5-7 | |
| A | EP 1 964 806 A1 (KALMAR IND OY AB [FI]) 3. September 2008 (2008-09-03) * Absatz [0001] - Absatz [0002] * * Absatz [0008] - Absatz [0016] * * Absatz [0020] - Absatz [0021] * ----- | 1-7 | |
| A | US 2011/052001 A1 (TAN HAN-SHUE [US] ET AL) 3. März 2011 (2011-03-03) * Tabelle 1 * ----- | 3,4 | |
| | | | RECHERCHIERTE SACHGEBIETE (IPC) G01S |

Der vorliegende Recherchenbericht wurde für alle Patentansprüche erstellt

| Recherchenort | Abschlußdatum der Recherche | Prüfer |
|---|---|---|
| München | 30. Oktober 2012 | Hirsch, Stefanie |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 12 00 6140

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-10-2012

| Im Recherchenbericht angeführtes Patentdokument | Datum der Veröffentlichung | Mitglied(er) der Patentfamilie | Datum der Veröffentlichung |
|---|---|---|---|
| EP 2096074 A1 | 02-09-2009 | AT 524407 T<br>AU 2009200433 A1<br>DE 102008011539 B3<br>EP 2096074 A1<br>US 2009222159 A1 | 15-09-2011<br>17-09-2009<br>18-06-2009<br>02-09-2009<br>03-09-2009 |
| WO 0242881 A2 | 30-05-2002 | AU 2726502 A<br>EP 1362275 A2<br>US 6577921 B1<br>US 2003193433 A1<br>WO 0242881 A2 | 03-06-2002<br>19-11-2003<br>10-06-2003<br>16-10-2003<br>30-05-2002 |
| EP 1964806 A1 | 03-09-2008 | CN 101269751 A<br>EP 1964806 A1<br>SG 145624 A1 | 24-09-2008<br>03-09-2008<br>29-09-2008 |
| US 2011052001 A1 | 03-03-2011 | KEINE | |

EPO FORM P0461

Für nähere Einzelheiten zu diesem Anhang : siehe Amtsblatt des Europäischen Patentamts, Nr.12/82